# EUROPÄISCHE PATENTSCHRIFT

(11) **EP 1 274 761 B1**
(45) Veröffentlichungstag und Bekanntmachung des Hinweises auf die Patenterteilung: **21.07.2004**
(21) Anmeldenummer: 01916986.1
(22) Anmeldetag: 12.02.2001
(51) Int. Cl.: C08G 63/78, C08G 63/80, C08G 63/88, B05B 17/06, B01J 2/04, B29B 9/02, C08J 3/12, B01J 2/30

(54) **VERFAHREN UND VORRICHTUNG ZUR HERSTELLUNG VON GRANULAT AUS VORPRODUKTEN THERMOPLASTISCHER POLYESTER UND COPOLYESTER**
METHOD AND DEVICE FOR PRODUCING GRANULATES FROM INTERMEDIATE PRODUCTS OF THERMOPLASTIC POLYESTERS AND COPOLYESTERS
PROCEDE ET DISPOSITIF POUR FABRIQUER DES GRANULATS A PARTIR DE PRODUITS PRECURSEURS DE POLYESTER ET DE COPOLYESTER THERMOPLASTIQUES

(30) Priorität: 19.04.2000 DE 10019508
(43) Veröffentlichungstag der Anmeldung: 15.01.2003
(73) Patentinhaber: RIETER AUTOMATIK GmbH, D-63762 Grossostheim (DE)
(72) Erfinder: MATTHAEI, André, 97318 Kitzingen (DE); LOCKER, Peter, 63762 Grossostheim (DE); ECKER, Andreas, 72622 Nürtingen-Hardt (DE); MÜLLER, Ralf, 60594 Frankfurt (DE)
(74) Vertreter: Bardehle, Heinz, Dipl.-Ing.
(86) Internationale Anmeldenummer: PCT/EP2001/001530
(87) Internationale Veröffentlichungsnummer: WO 2001/081450

(56) Entgegenhaltungen:
- EP-A- 0 712 703
- WO-A-95/33433
- DE-A- 2 417 366
- DE-A- 19 849 485
- US-A- 4 165 420
- US-A- 4 436 782
- US-A- 5 540 868

## Beschreibung

Die Erfindung betrifft ein Verfahren zur Vertropfung von Vorprodukten thermoplastischer Polyester oder Copolyester als schmelzflüssiges Monomer, Oligomer, Monomer-Glycol-Gemisch oder nach einer teilweisen Polykondensation und Erschmelzung zu einem schmelzflüssigen Vorprodukt, wobei das vertropfte Vorprodukt in ein gasförmiges Medium eingebracht wird, und eine Vorrichtung zur Durchführung dieses Verfahrens.

Aus der Druckschrift US 4,436,782 ist ein Verfahren zur Granulierung und Weiterbehandlung eines Polyethylenterephthalats (PET genannt) zu Pellets bekannt, wobei ein bei Temperaturen zwischen 260 und 280 °C gebildetes flüssiges Oligomer mit einer Viskositätszahl (bzw. intrinsischen Viskosität) zwischen 0,08 und 0,15 durch Düsen derart gepreßt wird, daß Tropfen entstehen, die durch einen Kühlbereich Inertgasatmosphäre in ein Wasserbad fallen, um die Tropfen zu amorphen Pellets erstarren zu lassen. Aus dieser Druckschrift ist auch bekannt, daß anstelle eines Wasserbades eine Trommel oder ein Transportband die Tropfen auffangen kann, um sie zu amorphen Pellets kühlen und erstarren zu lassen.

Das Verfahren hat den Nachteil, daß in der vorgesehenen Flüssigkeit, nämlich Wasser, bzw. auf dem vorgesehenen Transportband ein Erstarren von schwach polykondensierten Polyester wie dem Polyethylenterephthalat, amorphe Pellets als Vorprodukte entstehen, die erst durch einen weiteren energetisch und wirtschaftlich aufwendigen Schritt in kristalline Vorprodukte umgesetzt werden müssen. Da diese Vorprodukte beim Umsetzen in kristalline Vorprodukte und in höher polymere Substanzen eine klebrige Phase durchlaufen, kann die weitere Behandlung und Polykondensation der Pellets nur in aufwendig konstruierten Wirbelschichtöfen vorgenommen werden, um ein Verkleben der Pellets beim Durchkristallisieren und weiterem Polykondensieren zu verhindern.

Unterschiedliche Granulierverfahren, um aus amorphen Polyesterpellets kristalline Pellets herzustellen, sind aus US-PS 5,540,868 bekannt. Dazu muß das amorphe Polyestervorprodukt auf Temperaturen über 70 °C erhitzt werden, um den Kristallisationsprozeß auszulösen. Doch hat amorphes Polyester bei Temperaturen über 70 °C den Nachteil, daß es eine klebrige Oberfläche aufweist. Um ein Verkleben oder Verklumpen des amorphen Polyesters bei Kristallisationstemperaturen über 70 °C zu verhindern, muß das Vorprodukt als Granulat vorliegen und kann dann in einem Wirbelbettreaktor durch entsprechende Heißgasströme in Bewegung gehalten werden, bis in einem mehrstündigen Prozeß zumindest die Oberfläche soweit auskristallisiert ist, daß ein Verkleben der Vorprodukte ausgeschlossen ist.

Während amorphes Polyester transparent ist, ist die kristalline Phase eines Vorproduktes eines Polyesters oder Copolyesters an der weißen Einfärbung deutlich zu erkennen. Üblicherweise wird zur Überwindung der Klebrigkeit von amorphem Polymer der Kristallisationsvorgang der Vorprodukte mit der weiteren verstärkten Polykondensation, die üblicherweise zwischen 200 und 230 °C in einem Wirbelbettreaktor durchgeführt wird, verbunden. Dazu wird der Reaktor derart gefahren, daß zunächst zur Überwindung der Klebrigkeit eine Kristallisation bei einer optimalen Kristallisationstemperatur bei ungefähr 150 °C für mehrere Stunden gefahren wird und danach die Pellets oder Granulate für weitere Stunden zu höheren Kettenlängen bei Temperaturen zwischen 200 und 230 °C kondensiert werden.

Aus der gleichen obigen Druckschrift (US 5,540,868) ist bekannt, daß die Kristallisation von Pellets auch durch einen Thermoschock ausgelöst werden, indem heiße Pellets auf eine kalte Oberfläche prasseln oder umgekehrt kalte amorphe Pellets auf eine heiße Oberfläche prasseln. Eine derartige Schockkristallisation hat den Nachteil, daß die Reproduktion äußerst schwierig ist, da die Temperaturen einer heißen Platte zwischen 300 und 800 °C in Abhängigkeit von der Verweildauer der Pellets auf der Platte variieren. Bei Verwendung von Rotationsplatten wird im Temperaturbereich zwischen 30 und 200 °C gearbeitet, was wiederum von der Verweildauer der Pellets auf den heißen Rotationsplatten abhängig ist. Neben den rein thermischen Problemen, die sich bei einem derartigen Verfahren zur Kristallisation der Pellets einstellen, sind auch erhebliche mechanische Probleme zu überwinden.

Aufgabe der Erfindung ist es, ein Verfahren und eine Vorrichtung zur Vertropfung von Vorprodukten thermoplastischer Polyester und Copolyester entsprechend dem Oberbegriff des Anspruchs 1 und des Anspruchs 14 anzugeben, welche die Nachteile im Stand der Technik überwindet, eine Verfahrensverkürzung herkömmlicher Granulierverfahren bewirkt und auf bisher bekannten Verfahrensschritten und Vorrichtungen aufbaut, um zumindest oberflächenkristallisierte vertropfte Vorprodukte in Form von Monomeren, Oligomeren, Monomer-Glycol-Gemischen oder von teilweise polykondensierten Materialien herzustellen.

Diese Aufgabe wird mit den Merkmalen des Gegenstands der unabhängigen Ansprüche gelöst. Vorteilhafte Weiterbildungen der Erfindung ergeben sich aus den abhängigen Ansprüchen.

Dazu wird erfindungsgemäß das Vorprodukt in ein gasförmiges Medium eingebracht, wobei das gasförmige Medium nach dem Eintritt des vertropften Vorprodukts in das gasförmige Medium den Kristallisationsvorgang des Vorproduktes beschleunigt und den Kristallisationszustand des Vorproduktes beschleunigt herbeiführt, indem es das vertropfte Vorprodukt auf einer Temperatur über 100 °C und unter seinem Schmelzpunkt für einen begrenzten Zeitraum hält, bis eine Kristallisation des Tropfens in der Oberfläche des Vorprodukts abgeschlossen ist.

Diese Lösung hat den Vorteil, daß durch Einsetzen dieses gasförmigen Mediums das tropfenförmige Vorprodukt auf einer Temperatur über 100 °C und unter seinem Schmelzpunkt gehalten wird, und zwar für eine begrenzte Zeit, so daß sich Kristallisationskeime in Form von Defekten aufgrund der hohen Oberflächentemperatur von über 100 °C bilden, die mit zunehmender Abgabe der Schmelzwärme des Tropfens von oberflächennahen Keimen eine Kristallisation der Oberfläche in dem begrenzten Zeitraum bewirken, so daß das tropfenförmige Vorprodukt als Kugeln mit vorkristallisierter und damit nichtklebender Oberfläche nach dem Durchlaufen einer Fallstrecke aufgefangen werden können, ohne zu verkleben, und somit für eine unmittelbare Weiterbehandlung zu hochpolymerem Polykondensat eingesetzt werden können. Dadurch wird vorteilhaft die lange herkömmliche Vorbereitungsphase in einem Wirbelbettreaktor vermieden, in dem, wie oben erwähnt, zunächst der amorphe Zustand der Pellets über eine klebrige Phase in den Pellets innerhalb mehrerer Stunden zu überwinden ist.

In einer bevorzugten Durchführung des Verfahrens ist das gasförmige Medium Luft. Die Luft kann für einige Arten der Monomere, der Oligomere oder der teilweise polykondensierten Vorprodukte durch ihren Sauerstoffanteil zur Bildung von Kristallkeimen beitragen, jedoch muß für viele der Polykondensate und deren Monomere beim Vertropfen eine sauerstoffarme Atmosphäre zur Verfügung gestellt werden, da insbesondere bei niedrigviskosem PET eine oxidative Schädigung während des Kristallisationsvorgangs auftreten kann. In einer bevorzugten Ausführungsform des Verfahrens wird deshalb für eine sauerstoffarme Atmosphäre gesorgt, so daß derartige Schädigungen nicht auftreten.

In einer weiteren bevorzugten Durchführung des Verfahrens wird als gasförmiges Medium ein Inertgas eingesetzt. Ein Inertgas wird dann erforderlich, wenn Vorprodukte von Polyestern oder Copolyestern vertropft werden, die besonders empfindlich auf verschiedene Gasatmosphären reagieren, so daß hier die Kristallisationskeime lediglich durch die Beibehaltung einer hohen Temperatur, nämlich über 100 °C erzeugt werden, indem daß als Kristallisationskeime an der Oberfläche der Tropfen eine ausreichende Dichte von Leerstellen und thermisch bedingten Defekten erzeugt wird.

Als weiteres gasförmiges Medium kann in vorteilhafter Weise Stickstoff eingesetzt werden, der Stickstoff bei vielen der zu vertropfenden Vorprodukte keine chemischen Reaktionen zeigt und somit eine quasi inerte Umgebung liefert und somit lediglich die hohe Temperatur des gasförmigen Mediums Stickstoff für die Bildung von Kristallisationskeimen sorgt.

Das gasförmige Medium wird vorzugsweise im Gegenstrom zu einer Fallstrecke des vertropften Vorproduktes geführt und erwärmt sich beim Aufsteigen des Gases entlang der Fallstrecke, so daß dafür gesorgt wird, daß das vertropfte Vorprodukt für einen begrenzten Zeitraum, nämlich während es die Fallstrecke entgegen dem gasförmigen Medium, durchläuft eine Temperatur über 100 °C beibehält. Da der Schmelztropfen selbst über 200 °C heiß ist, erwärmt er das entgegenströmende Gas und heizt dieses auf, so daß bei einer Kreisprozeßführung des Gases das aufgeheizte Gas der Fallstrecke wieder zugeführt werden kann und eventuell dem aufgeheizten Gas Energie entzogen werden muß, um den begrenzten Zeitraum für eine Temperatur über 100 °C für das vertropfte Vorprodukt nicht unnötig zu vergrößern, während zu Beginn des Vertropfungsvorgangs das gasförmige Medium aufzuheizen ist, um es temperiert zur Verfügung zu stellen.

Zum Erzeugen des Gegenstromes wird das gasförmige Medium in die Fallstrecke des vertropften Vorproduktes vorzugsweise am untersten Niveau der Fallstrecke eingeführt und vorher temperiert. Die Temperierung erfolgt dabei vorzugsweise mittels Wärmetauscher, der das gasförmige Medium je nach Bedarf kühlt oder aufheizt, so daß es mit einer gleichbleibenden Temperatur als Gegenstrom in die Fallstrecke des vertropften Vorproduktes eingeführt werden kann.

Die Einführtemperatur ist dabei auf größer gleich 30 °C und kleiner gleich 120 °C geregelt, vorzugsweise werden Temperaturen größer gleich 40 °C und kleiner gleich 100°C eingehalten. Diese teilweise niedrigen Einlauftemperaturen sorgen dafür, daß für einen begrenzten Zeitraum die vertropften Vorprodukte auf einer Temperatur über 100 °C während des Durchlaufens der Fallstrecke gehalten werden.

Die Vorprodukte werden in einer weiteren Ausführungsform der Erfindung schmelzflüssig durch Schwingungsanregung vertropft. Dabei liegen die Schwingungsanregungen bei einer Frequenz zwischen 30 und 1.000 Hz, vorzugsweise zwischen 50 und 400 Hz. Dabei kann ein Durchsatz von 5.000 bis 30.000 kg/h erreicht werden. Dieser Durchsatz kann durch eine flächige Verteilung von Düsen auf einer Düsenkopfplatte noch wesentlich erhöht werden. Dazu wird dem Düsenkopf in einer bevorzugten Ausführungsform des Verfahrens das Vorprodukt mit einer intrinsischen Viskosität im Bereich zwischen 0,05 bis 0,3 dl/g zugeführt. Bei vorgegebenem Düsendurchmesser nimmt der Tropfendurchmesser mit zunehmender Viskosität zu und mit zunehmender Frequenz ab. Insofern ist der Durchmesser der Tropfen bei einer schwingungsangeregten Vertropfung relativ genau über die Schmelzentemperatur (Einstellung der intrinsischen Viskosität) und die Schwingfrequenz einstellbar.

Der Schmelzpunkt eines PET-Monomers liegt bei 230 bis 240 °C und ist damit niedriger als bei dem endgültigen PET-Polymer. Der Erstarrungspunkt des vertropften Vorproduktes kann mit ungefähr 200 °C angenommen werden, so daß nach dem Auftritt des Tropfens aus der Düse und einer kurzen Fallstrecke bis zum Erreichen des Erstarrungspunktes von etwa 200 °C zunächst keine Kristallisation eintritt und in der weiteren Abkühlphase des Tropfens zunächst an der Oberfläche Kristallkeime gebildet werden, solange die Tropfen über 100 °C gehalten werden, wobei die Kristallkeime im wesentlichen aus Defekten und Leerstellen entstehen. Von den Kristallkeimen geht dann eine Kristallisation der Tropfenoberfläche aus, die schließlich dafür sorgt, daß der Tropfen am Ende der Fallstrecke keine klebrigen Eigenschaften mehr besitzt, wie das bei amorphen Pellets über 70 °C der Fall sein würde. Für diese Kristallisationsphase bei einem gasförmigen Gegenstrom, in der der Tropfen des Vorproduktes über 100 °C gehalten wird, hat sich eine Fallhöhe von 8 bis 15 m, je nach Durchmesser des Tropfens, bewährt. Somit ist ein wesentlicher Parameter des Verfahrens die Reproduzierbarkeit und die Gleichmäßigkeit der Tropfendurchmesser.

In einer bevorzugten Durchführung des Verfahrens wird das Vorprodukt zu Tropfen vertropft, deren Durchmesser zu mehr als 80 Gew.-% im Bereich des doppelten Düsendurchmessers liegt, und ein Durchmesser unterhalb des Düsendurchmessers zu weniger als 3 Gew.-% und ein Durchmesser größer als dem Dreifachen des Düsendurchmessers zu weniger als 10 Gew.-% des vertropften Vorproduktes auftritt. Mit dieser hohen Gleichförmigkeit der Vertropfung der schwingungsangeregten Schmelze eines Vorproduktes eines Polyesters oder Copolyesters sind die Vorteile einer gleichmäßigen Kristallisation, einer gleichförmigen Abkühlung und einer erreichbaren geringen Adhäsionsneigung der Tropfen verbunden.

Diese enge Kugelgrößenteilung liefert auch einen geringen Staubanteil, der bei dem erfindungsgemäßen Verfahren bei weniger als 1 % liegt, womit der Vorteil einer verminderten elektrostatischen Aufladung, einer geringeren Menge an Ausschuß und einer verminderten Explosionsgefahr verbunden ist. Schließlich wird bei der Weiterverarbeitung in der Festkörper-Polykondensation (SSP genannt) ein enges Korngrößenspektrum, wie es mit dem erfindungsgemäßen Verfahren möglich ist, für eine gleichmäßigere Polykondensation sorgen. Eine Kugelgröße von ca. 0,5 bis 2 mm Durchmesser beschleunigt deutlich die Kondensation von Wasser und Glycol bei der Weiterbehandlung im Zuge der Festkörperpolykondensation. Dabei ist eine Kugelgröße von 1 bis 10 mg eine deutliche Verbesserung gegenüber den bisher eingesetzten Granulatgrößen, die wesentlich darüber liegen.

Schließlich ist es von besonderem Vorteil, wenn als Vorprodukt ein vorkristallisierter Monomertropfen eingesetzt werden kann, da bei der nachfolgenden Weiterverarbeitung weniger unerwünschte Zwischen- oder Spaltprodukte entstehen, als bei den herkömmlichen Verarbeitungsverfahren.

Eine Vorrichtung zur Durchführung des Vertropfungsverfahrens weist folgende Merkmale auf:
einen Düsenkopf, der durch Schwingungsanregung der Schmelze tropfenförmige Pellets aus dem Vorprodukt bildet,
einen Fallturm, in dem das vertropfte Vorprodukt im Gegenstrom eines gasförmigen Mediums temperiert wird,
einen Wärmetauscher, der im Bodenbereich des Fallturms angeordnet ist und das gasförmige Medium aufheizt oder kühlt, um es auf gleichmäßig hohe Einströmtemperatur zu regeln,
ein Gebläse, welches das gasförmige Medium im Fallturm auf eine vorgegebene Strömungsgeschwindigkeit beschleunigt, und
eine Rückführleitung, die das gasförmige Medium nach Verlassen des Fallturms zum Wärmetauscher zurückführt.

Diese Anlage hat einerseits den Vorteil einer relativ gleichförmigen Vertropfung des schmelzflüssigen Vorprodukts durch Schwingungsanregung, andererseits den Vorteil des relativ einfachen Aufbaus, der lediglich eine ausreichende Fallstrecke in einem Fallturm zur Verfügung stellt, um eine begrenzte Verweilzeit des vertropften Vorprodukts in einer Temperatur über 100 °C zu gewährleisten, wobei die Wärmeenergie, die von dem vertropften Vorprodukt an das entgegenströmende Gas abgegeben wird, genutzt wird, um energiesparend wiederverwendet zu werden. Durch die Länge der Fallstrecke und die Vorwärm- oder Temperiertemperatur des eingeführten gasförmigen Mediums kann die Verweilzeit über den kritischen 100 °C in der Fallstrecke des Fallturms eingestellt werden. Insgesamt bestimmen Schwingungsfrequenz der Vertropfungseinrichtung, Düsendurchmesser des Düsenkopfes, Viskosität und damit Temperatur des Vorproduktes im Düsenkopf und Temperierung des gasförmigen Mediums den Durchmesser und den Kristallisationsfortschritt des vertropften Vorprodukts. Der Grad der Kristallisation kann grob über die milchige Trübung der Tropfung bestimmt werden, so daß auch hier eine verläßliche Stichprobenüberprüfung der Funktionsweise der Vorrichtung und des Verfahrens durchführbar ist.

In einer bevorzugten Ausführungsform der Vorrichtung zur Durchführung des Verfahrens weist der Düsenkopf Düsenöffnungen auf, die eine Vertropfung in vertikaler Richtung sichern. Durch die vertikale Vertropfung entsteht im Gegensatz zu einer Sprühdüse die Möglichkeit, die Fallstrecke der Tropfen völlig parallel ohne Wandberührung durch den Fallturm der Anlage zu führen und nach der vorgegebenen Fallstrecke, die einer Kristallisationszeit entspricht, das Granulat oder die kugelförmigen Tropfen klebefrei in einem Trichter aufzufangen und am Boden des Fallturms herauszuführen.

In einer weiteren bevorzugten Ausführungsform der Erfindung wird mittels des Wärmetauschers die Temperatur des gasförmigen Mediums auf eine Einführtemperatur von größer gleich 30 °C und kleiner gleich 100 °C, vorzugsweise größer gleich 40 °C und kleiner gleich 100 °C geregelt. Dazu durchfließt den Wärmetauscher ein Wärmetauscherfluid in einem getrennt geregelten und temperaturstabilisierten Kreislauf, so daß der Wärmetauscher das im Kreis geführte gasförmige Medium automatisch kühlt bei Überschreitung der Einführtemperatur und automatisch erwärmt oder erhitzt bei Unterschreiten der eingestellten Einführtemperatur bzw. der Temperatur des Wärmetauscherfluids.

In einer weiteren bevorzugten Ausführungsform der Erfindung wird eine Strömungsgeschwindigkeit von 0,3 bis 1 m/s des gasförmigen Mediums in dem Fallturm über ein Gebläse eingestellt. Das Gebläse kann im Bodenbereich vor oder hinter dem Wärmetauscher angeordnet sein und als Druckgebläse den Gegenstrom des gasförmigen Mediums im Fallturm erzeugen oder es kann als Sauggebläse ausgebildet sein und nach der Austrittsöffnung für gasförmiges Medium der Anlage im Bereich des Vertropfungsraumes rund um den Düsenkopf positioniert sein.

Die Fallstrecke im Fallturm ist in einer bevorzugten Ausführungsform der Erfindung 10 bis 20 m lang, vorzugsweise 12 bis 15 m, so daß eine begrenzte Zeitspanne einer optimalen Kristallisationszeit von 2,5 bis 3,5 s eingehalten werden kann.

### Beispiel 1

Ein Monomer-Glycol-Gemisch eines Polyethylenterephthalats mit einer Viskositätszahl bzw. einer intrinsischen Viskosität von 0,2 wird mit einer Temperatur von ungefähr 260 °C durch einen Düsenkopf zum Vertropfen und Schmelzen ausgetragen, der Düsendurchmesser beträgt dabei jeweils 0,75 mm, so daß die austretende Schmelze des Vorproduktes eines Polyesters durch Schwingungsanregung zu Tropfen mit einem Durchmesser von etwa 1,5 mm vertropft wird. Diese im wesentlichen kugelförmigen Tropfen durchlaufen eine Fallstrecke von ca. 15 m, bei der sie mittels eines sauerstoffarmen gasförmigen Mediums auf einer Temperatur über 100 °C gehalten werden. Während dieser begrenzten Fallzeit von ca. 3 s durch die begrenzte Fallstrecke bilden sich an der Oberfläche der Tropfen Kristallisationskeime und kristallisieren die Oberfläche derart, daß kein klebriger amorpher Zustand beim Durchlaufen von Temperaturen unter 100 °C auftritt. Auf der Fallstrecke des Fallturms von einer Höhe von etwa 15 m kühlt das auf der Oberfläche kristallisierte Granulat auf eine Weiterbearbeitungstemperatur von etwa 70 °C ab und wird in einem Trichter am Boden der Fallstrecke gesammelt. Eine DSC-Messung (bzw. Dynamic Scanning Calometry) ergibt einen Oberflächenkristallisationsgrad von 100 % für die entstandenen kugelförmigen Granulate, die im Mittel einen Durchmesser von 1,5 mm aufweisen, wobei über 80 % des getropften Vorproduktes im Bereich des doppelten Düsendurchmessers liegen und weniger als 3 Gew.-% unter dem Durchmesser des Düsendurchmessers fallen und weniger als 10 Gew.-% über dem Dreifachen des Düsendurchmessers liegen. Mit dieser engen Kugelgrößenverteilung von weniger als 3 % der Kugeln mit einem Durchmesser kleiner als die Düsenbohrung und weniger als 10 % der Kugeln mit einem Durchmesser größer als dem dreifachen Düsenbohrungsdurchmesser wird vorteilhaft eine gleichmäßige Materialqualität durch gleichmäßige Abkühlbedingungen und eine gleichmäßige Materialqualität durch gleichmäßige Kristallisationsbedingungen erreicht, woraus eine gleichmäßige und geringe Adhäsionsneigung der vertropften Kugeln resultiert. Weiterhin hat diese geringe und enge Kugelgrößenverteilung den Vorteil einer gleichmäßigen Materialqualität bei der nachfolgenden Weiterverarbeitung. Bei der Polykondensation im festen Zustand, dem sogenannten SSP-Vorgang, herrschen gleichmäßige Bedingungen, und somit wird ein Material erreicht mit einem relativ homogenen Molekulargewicht der Polykondensationsketten. Außerdem gewährleistet diese enge Kugelgrößenverteilung einen äußerst geringen Anteil an Fein- oder Staubmaterial, der unter 1 % liegt, so daß weniger Ausschuß entsteht und eine geringe elektrostatische Aufladung im Bereich des Fallturms auftritt, so daß der Bereich des Fallturms vor einer Staubexplosion geschützt ist.

### Beispiel 2

Bei einem Vertropfen eines Polyestervorproduktes mit einer intrinsischen Viskosität, die den Wert von 0,15 unterschreitet, kann die Fallzeit zum oberflächlichen Kristallisieren in dem Fallturm des Ausführungsbeispiels nicht ausreichen, so daß Tropfen aus einer Schmelze mit niedrigen Viskosität eventuell klebrig bleiben und damit den Auffangtrichter verstopfen. In diesem Fall werden im Vertropfungsbereich die Tropfen mit feinen Polyesterpartikeln in der Oberfläche bedeckt, um einerseits den Kristallisationsvorgang durch entsprechende Kristallisationskeime zu beschleunigen und andererseits das Material beim Auftreffen auf einen Auffangtrichter nach Durchlaufen des Fallturms vor einem Verkleben zu schützen. Mit diesem Ausführungsbeispiel ist es möglich, niederviskose Vorprodukte von Polyestern und Copolyestern selbst bei kürzeren Fallstrecken im vertropften Zustand vor einem Verkleben zu schützen. Die Zuführung mit feinen Polyesterpartikeln kann in einem weiteren bevorzugten Ausführungsbeispiel der Erfindung mit der Eintrittsöffnung für gasförmiges Medium im Gegenstrom vom Bodenbereich des Fallturms aus zugeführt werden und die Polyesterpartikel können, soweit sie nicht für die Beschichtung der Tropfen erforderlich sind, über die Austrittsöffnung für gasförmiges Medium aus der Anlage ausgetragen werden, so daß gewährleistet ist, daß sich kein explosives Staubgemisch im Fallturm anreichert.

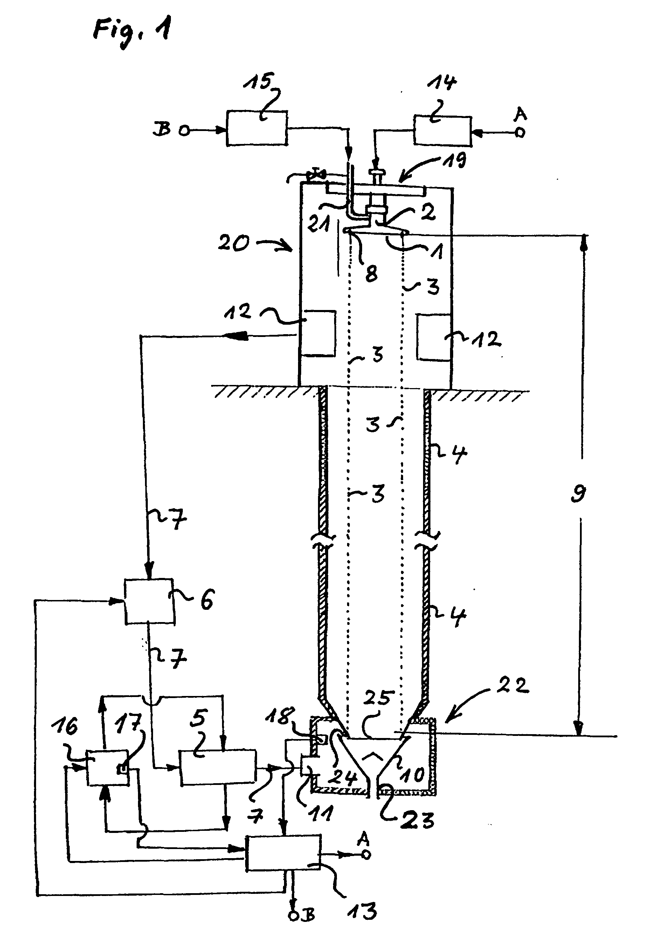

Die Erfindung wird nun anhand der Figur 1 näher erläutert.

Figur 1 zeigt eine Vorrichtung zur Durchführung eines Verfahrens zur Vertropfung von Vorprodukten thermoplastischer Polyester oder Copolyester. Die Vorrichtung weist dazu einen Düsenkopf 1 auf, der durch Schwingungsanregung der Schmelze 2 durch einen Schwingungsgenerator 14 tropfenförmige Pellets 3 aus dem Vorprodukt bildet. Das Vorprodukt wird als Schmelze 2 eines Monomers, eines Oligomers, einen Monomer-Glycol-Gemisches oder eines teilweise polykondensierten Vorproduktes über die Schmelzeinrichtung 15 dem Düsenkopf 1 zugeführt. Die Vertropfungseinheit 19, die im obersten Bereich der Anlage angebracht ist, der im folgenden Kopfbereich 20 genannt wird, ist mit diesen Hilfseinrichtungen in der Lage, eine niedrig-viskose Schmelze dem Düsenkopf 1 über die Schmelzleitung 21 zuzuführen und über die senkrecht nach unten gerichteten Düsenöffnungen 8 vertikal zu vertropfen.

Die Vorrichtung weist darüber hinaus einen Fallturm 4 auf, der unterhalb des Kopfbereiches angebracht ist und der eine Länge von 10 bis 20 m aufweist und somit eine Fallstrecke 9 für die kugelförmigen Tropfen zur Verfügung stellt, die sich im wesentlichen aus der Höhe des Fallturmes 4 und einer Falldistanz im Kopfbereich 20 in der Ausführungsform nach Figur 1 zusammensetzt. Im Fußbereich 22 des Fallturms 4 befindet sich ein Abfüllbereich 23, in dem durch einen Auffangtrichter die an der Oberfläche beim Durchlaufen der Fallstrecke 9 kristallisierten kugelförmigen Tropfen aufgefangen werden und im Abfüllbereich portioniert oder zur Weiterverarbeitung weitergeleitet werden können.

Im Fußbereich 22 des Fallturms 4 ist eine Eintrittsöffnung 11 für ein gasförmiges Medium angeordnet, das über eine Ringöffnung 24 zwischen Fallturmende 25 und Auffangtrichter 10 angeordnet ist und die vom Gebläse 6 über den Wärmetauscher 5 und die Rückführleitung 7 der Eintrittsöffnung zugeführt wird. Die Ringöffnung 24 am Fallturmende 25 sorgt für einen gleichförmigen Gegenstrom des gasförmigen Mediums vom Fußbereich 22 des Fallturms 4 zu Austrittsöffnungen 12 für das gasförmige Medium im Kopfbereich 20 der Vorrichtung. Eine Rückführleitung 7 zu der Eintrittsöffnung 11 ist den Austrittsöffnungen 12 nachgeschaltet, so daß das gasförmige Medium im Kreis geführt werden kann.

Das gasförmige Medium ist in seiner Zusammensetzung dem Material des vertropften Vorproduktes angepaßt und kann je nach der Empfindlichkeit gegenüber Sauerstoff Luft, sauerstoffarme Luft, im wesentlichen Stickstoff oder ein Inertgas sein, das entgegen der Fallrichtung der Tropfen im Fallturm mit einer Geschwindigkeit zwischen 0,3 bis 1 m/s aufsteigt. In einem Ausführungsbeispiel ist die Strömungsgeschwindigkeit des gasförmigen Mediums 0,6 m/s. Das gasförmige Medium wird in dieser Anlage mit Hilfe des Wärmetauschers 5 je nach Bedarf auf eine konstante Temperatur vorgeheizt, die im Fußbereich 22 des Fallturms 4 mit einem Sensor 18 für die Einlauftemperatur des gasförmigen Mediums erfaßt wird. Der erfaßte Wert wird einem Steuergerät 13 zugeführt, das ein Fluid für den Wärmetauscher in einer Heiz- und Kühleinrichtung auf einer vorgegebenen Temperatur hält, die über einen Temperatursensor 17 für das Wärmetauscherfluid überwacht wird, so daß das Steuergerät 13 die Temperatur des Wärmetauscherfluids mit Hilfe der Heiz- und Kühleinrichtung 16 regeln kann. Das Steuergerät 13 kann weiterhin über den Anschlußpunkt A auf den Schwingungsgenerator 14 einwirken und die Schwingfrequenz, die im Bereich von 30 Hz bis 1 kHz einstellbar ist, verändern. Ferner kann das Steuergerät 13 über den Anschlußpunkt B auf die Schmelzeinrichtung 15 einwirken, indem einerseits die Viskosität der Schmelze durch die Schmelztemperatur der Schmelzeinrichtung 15 gesteuert wird und andererseits der Massenstrom über eine entsprechende Druckversorgung in der Schmelzeinrichtung 15 beeinflußt werden kann.

Mit der Steuerung des Druckes und der Temperatur der Schmelze kann gleichzeitig der Durchmesser der Tropfen verändert werden, der optimal zu etwa 80 Gew.-% dem doppelten Durchmesser der Düsenöffnungen 8 entspricht und nur zu 3 % unter dem Durchmesser der Düsenöffnung 8 liegt und weniger als 10 Gew.-% dem Dreifachen Durchmesser der Düsenöffnung 8 entspricht. Eine optimale Durchmessergröße hat sich für 1,5 mm sowohl für die Erzeugung von vorkristallisierten, d.h. an der Oberflächen kristallisierten Tropfen des Vorproduktes, als auch für die Weiterverarbeitung des Vorproduktes zu langkettigen Polyestern und Copolyestern als optimal erwiesen.

Das Steuergerät 13 ist in dieser Ausführungsform mikroprozessorgesteuert und ist geeignet, sowohl die Einlaßtemperatur des gasförmigen Mediums zu regeln, als auch den Durchsatz des gasförmigen Mediums sowie den Durchsatz des vertropften Vorproduktes eines Polyesters und/oder Copolyesters zu steuern. Dabei wird gewährleistet, daß auf der Fallstrecke 9 die aus dem Düsenkopf austretenden Schmelztropfen der auf einer Temperatur von 240 bis 290 °C aufgeheizten Schmelze auf eine Erstarrungstemperatur um 200 °C im Kopfbereich 20 der Vorrichtung abgekühlt werden und durch den temperierten gasförmigen Gegenstrom für eine Zeitspanne von 2,5 bis 3,5 s auf einer Temperatur über 100 °C gehalten werden, so daß sich an der Oberfläche der Tropfen beim Erstarren Keimkristalle bilden, die sich zu einer oberflächennahen Kristallisationsschicht verdichten, bis die Tropfen mit einer Temperatur unter 100 °C im Fußbereich 22 des Fallturms durch den Auffangtrichter 10 aufgefangen und abgeführt werden. Zur Verbesserung der Energiebilanz der Vorrichtung ist der Fallturm 4 sowie der Fußbereich des Fallturms 4 wärmeisolierend ausgeführt und das gasförmige Medium wird in einem Kreisprozeß zur teilweisen Rückgewinnung der Schmelzwärme geführt.

### Bezugszeichenliste

- 1: Düsenkopf
- 2: Schmelze
- 3: Pellets
- 4: Fallturm
- 5: Wärmetauscher
- 6: Gebläse
- 7: Rückführleitung
- 8: Düsenöffnung
- 9: Fallstrecke
- 10: Auffangtrichter
- 11: Eintrittsöffnung für gasförmiges Medium
- 12: Austrittsöffnung für gasförmiges Medium
- 13: Steuergerät
- 14: Schwingungsgenerator
- 15: Schmelzeinrichtung
- 16: Heiz- und Kühleinrichtung
- 17: Temperatursensor für Wärmetauscherfluid
- 18: Temperatursensor für Einlauftemperatur des gasförmigen Mediums
- 19: Vertropfungseinheit
- 20: Kopfbereich
- 21: Schmelzleitung
- 22: Fußbereich
- 23: Abfüllbereich
- 24: Ringöffnung
- 25: Fallturmende

## Patentansprüche

1. Verfahren zur Vertropfung von Vorprodukten thermoplastischer Polyester oder Copolyester als schmelzflüssiges Monomer, Oligomer, Monomer-Glycol-Gemisch oder nach einer teilweisen Polykondensation und Erschmelzung zu einem schmelzflüssigen Vorprodukt, wobei das vertropfte Vorprodukt in ein gasförmiges Medium eingebracht wird,
**dadurch gekennzeichnet, daß**
das gasförmige Medium nach dem Eintritt des vertropften Vorprodukts aus Tropfen mit einem Durchmesser von 0,3 bis 3 mm in das gasförmige Medium den Kristallisationsvorgang des Vorproduktes beschleunigt und den Kristallisationszustand des Vorproduktes durch Halten des vertropften Vorproduktes auf einer Temperatur über 100°C und unter seinem Schmelzpunkt für einen begrenzten Zeitraum beschleunigt herbeiführt, bis eine Kristallisation der Tropfen an der Oberfläche des Vorproduktes abgeschlossen ist.

2. Verfahren nach Anspruch 1, **dadurch gekennzeichnet, daß** als gasförmiges Medium Luft eingesetzt wird.

3. Verfahren nach Anspruch 1, **dadurch gekennzeichnet, daß** als gasförmiges Medium eine sauerstoffarme Atmosphäre eingesetzt wird.

4. Verfahren nach Anspruch 1, **dadurch gekennzeichnet, daß** als gasförmiges Medium ein Inertgas eingesetzt wird.

5. Verfahren nach Anspruch 1, **dadurch gekennzeichnet, daß** als gasförmiges Medium im wesentlichen Stickstoff eingesetzt wird.

6. Verfahren nach einem der vorhergehenden Ansprüche, **dadurch gekennzeichnet, daß** das gasförmige Medium im Gegenstrom zu einer Fallstrecke des vertropften Vorproduktes geführt wird.

7. Verfahren nach Anspruch 6, **dadurch gekennzeichnet, daß** das gasförmige Medium in die Fallstrecke des vertropften Vorproduktes temperiert am untersten Niveau der Fallstrecke eingeführt wird.

8. Verfahren nach Anspruch 7, **dadurch gekennzeichnet, daß** die Temperierung des gasförmigen Mediums mittels Wärmeaustauscher erfolgt und das gasförmige Medium in einem Kreisprozeß geführt wird.

9. Verfahren nach einem der vorhergehenden Ansprüche, **dadurch gekennzeichnet, daß** das Vorprodukt schmelzflüssig durch Schwingungsanregung vertropft wird.

10. Verfahren nach einem der vorhergehenden Ansprüche, **dadurch gekennzeichnet, daß** das Vorprodukt mit einer intrinsischen Viskosität im Bereicht zwischen 0,05 bis 0,3 dl/g vertropft wird.

11. Verfahren nach einem der vorhergehenden Ansprüche, **dadurch gekennzeichnet, daß** das Vorprodukt zu Tropfen vertropft wird, deren Durchmesser zu mehr als 80 Gew.-% im Bereich des doppelten Düsendurchmessers liegt und ein Durchmesser unterhalb des Düsendurchmessers zu wenigen als 3 Gew.-% und ein Durchmesser größer als dem Dreifachen des Düsendurchmessers zu weniger als 10 Gew.-% des vertropften Vorproduktes auftritt.

12. Verfahren nach einem der vorhergehenden Ansprüche, **dadurch gekennzeichnet, daß** beim Vertropfen ein Staubpartikelanteil kleiner als 1 Gew.-% des vertropften Vorprodukts auftritt.

13. Verfahren nach einem der vorhergehenden Ansprüche, **dadurch gekennzeichnet, daß** ein niedrigviskoses Vorprodukt mit einer intrisischen Viskosität kleiner als 0,15 in einer Umgebung mit feinen Polyesterpartikeln vertropft wird, so daß ein Beschichten der Tropfen an der Oberfläche mit Polyesterpartikeln erfolgt, die die Kristallisation fördert und ein Verkleben der erstarrten Tropfen verhindert.

14. Vorrichtung zur Durchführung des Verfahrens nach einem der Ansprüche 1 bis 14, wobei die Vorrichtung aufweist:
Einen Düsenkopf (1), der durch Schwingungsanregung der Schmelze (2) tropfenförmige Pellets (3) mit einem Durchmesser von 0,3 bis 3 mm aus dem Vorprodukt bildet,
einen Fallturm (4), in dem das vertropfte Vorprodukt im Gegenstrom eines gasförmigen Medium temperierbar ist,
einen Wärmetauscher (5), der im Bodenbereich des Fallturms (4) angeordnet ist und das gasförmige Medium aufheizt oder kühlt, um es auf gleichmäßig hohe Einströmtemperatur zu regeln,
ein Gebläse (6), das das gasförmige Medium in dem Fallturm (4) auf eine gegebene Strömungsgeschwindigkeit beschleunigt, und
eine Rückführleitung (7), die das gasförmige Medium nach Verlassen des Fallturms (4) dem Wärmetauscher (5) zuführt.

15. Vorrichtung nach Anspruch 14, **dadurch gekennzeichnet daß** der Düsenkopf (1) Düsenöffnungen (8) aufweist, die vertikal ausgerichtet sind und eine Vertropfung in vertikaler Richtung mittels Schwingungsanregung der Schmelze (2) sichern.

16. Vorrichtung nach Anspruch 14 oder 15, **dadurch gekennzeichnet, daß** der Wärmetauscher (5) die Temperatur des gasförmigen Mediums auf eine Einführtemperatur von größer gleich 30°C und kleiner gleich 120°C, vorzugsweise größer gleich 40°C und kleiner gleich 100°C regelt.

17. Vorrichtung nach einem der Ansprüche 14 bis 16, **dadurch gekennzeichnet, daß** das Gebläse (6) auf eine Strömungsgeschwindigkeit von 0,3 bis 1 m/s des gasförmigen Mediums im Fallturm (4) einstellbar ist.

18. Vorrichtung nach einem der Ansprüche 14 bis 17, **dadurch gekennzeichnet, daß** der Fallturm (4) eine Fallstrecke (9) von 10 bis 20 m, vorzugsweise 12 bis 15 m für das vertropfte Vorprodukt aufweiset.

## Claims

1. Process for forming drops of precursors of thermoplastic polyesters or copolyesters as molten monomer, oligomer, monomer/glycol mixture or after partial polycondensation and melting to give a molten precursor, wherein the precursor formed into drops is introduced into a gaseous medium, **characterized in that** the gaseous medium, after entry of the precursor formed into drops having a diameter of from 0.3 to 3 mm into the gaseous medium, accelerates the crystallization process of the precursor and brings about the crystallization state of the precursor in an accelerated manner by holding the drop-form precursor at a temperature above 100°C and below its melting point for a limited time until crystallization of the drop at the surface of the precursor is complete.

2. Process according to Claim 1, **characterized in that** the gaseous medium employed is air.

3. Process according to Claim 1, **characterized in that** the gaseous medium employed is a low-oxygen atmosphere.

4. Process according to Claim 1, **characterized in that** the gaseous medium employed is an inert gas.

5. Process according to Claim 1, **characterized in that** the gaseous medium employed is essentially nitrogen.

6. Process according to one of the preceding claims, **characterized in that** the gaseous medium is passed in countercurrent to a fall zone of the precursor formed into drops.

7. Process according to Claim 6, **characterized in that** the gaseous medium is introduced under temperature control into the fall zone of the precursor formed into drops at the lowest level of the fall zone.

8. Process according to Claim 7, **characterized in that** the temperature control of the gaseous medium takes place by means of a heat exchanger, and the gaseous medium is circulated.

9. Process according to one of the preceding claims, **characterized in that** the precursor in molten form is formed into drops by vibration excitation.

10. Process according to one of the preceding claims, **characterized in that** the precursor having an intrinsic viscosity in the range from 0.05 to 0.3 dl/g is formed into drops.

11. Process according to one of the preceding claims, **characterized in that** the precursor is formed into drops whose diameter is to the extent of greater than 80% by weight in the region of twice the nozzle diameter, and a diameter less than the nozzle diameter occurs to the extent of less than 3% by weight and a diameter greater than three times the nozzle diameter occurs to the extent of less than 10% by weight of the precursor formed into drops.

12. Process according to one of the preceding claims, **characterized in that** a dust-particle content of less than 1% by weight of the precursor formed into drops occurs during drop formation.

13. Process according to one of the preceding claims, **characterized in that** a low-viscosity precursor having an intrinsic viscosity of less than 0.15 is formed into drops in an environment with fine polyester particles, resulting in coating of the drops at the surface with polyester particles, which promotes crystallization and prevents the solidified drops from sticking together.

14. Apparatus for carrying out the process according to one of Claims 1 to 14, said apparatus comprising:
a nozzle head (1) which forms drop-form pellets (3) from the precursor by vibration excitation of the melt (2),
a fall tower (4), in which the temperature of the precursor formed into drops can be controlled in a countercurrent of the gaseous medium,
a heat exchanger (5), which is arranged in the base region of the fall tower (4) and heats or cools the gaseous medium in order to regulate it to a uniformly high inflow temperature,
a fan (6), which accelerates the gaseous medium in the fall tower (4) to a given flow rate, and
a return line (7), which feeds the gaseous medium to the heat exchanger (5) after leaving the fall tower (4).

15. Apparatus according to Claim 14, **characterized in that** the nozzle head (1) has nozzle apertures (8) which are vertically facing and ensure drop formation in the vertical direction by means of vibration excitation of the melt (2).

16. Apparatus according to Claim 14 or 15, **characterized in that** the heat exchanger (5) regulates the temperature of the gaseous medium to a feed temperature of greater than or equal to 30°C and less than or equal to 120°C, preferably greater than or equal to 40°C and less than or equal to 100°C.

17. Apparatus according to one of Claims 14 to 16, **characterized in that** the fan (6) can be adjusted to a flow rate of from 0.3 to 1 m/s of the gaseous medium in the fall tower (4).

18. Apparatus according to one of Claims 14 to 17, **characterized in that** the fall tower (4) has a fall zone (9) of from 10 to 20 m, preferably from 12 to 15 m, for the precursor formed into drops.

## Revendications

1. Procédé destiné à la transformation en gouttes de produits préliminaires de polyester ou de copolyester thermoplastique en tant que monomère, oligomère, mélange monomère / glycol à l'état fondu liquide, ou en un produit préliminaire à l'état fondu liquide après une polycondensation et une fusion partielles, le produit préliminaire transformé en gouttes étant introduit dans un milieu gazeux,
**caractérisé en ce que**,
après l'entrée dans le milieu gazeux du produit préliminaire transformé en gouttes d'un diamètre de 0,3 à 3 mm, le milieu gazeux accélère le processus de cristallisation du produit préliminaire, et provoque de façon accélérée l'état de cristallisation du produit préliminaire par le maintien pendant un laps de temps limité du produit préliminaire transformé en gouttes à une température supérieure à 100 °C, et au-dessous de son point de fusion, jusqu'à ce qu'une cristallisation des gouttes soit terminée à la surface du produit préliminaire.

2. Procédé selon la revendication 1, **caractérisé en ce que** de l'air est utilisé en tant que milieu gazeux.

3. Procédé selon la revendication 1, **caractérisé en ce qu'**une atmosphère pauvre en oxygène est utilisée en tant que milieu gazeux.

4. Procédé selon la revendication 1, **caractérisé en ce qu'**un gaz inerte est utilisé en tant que milieu gazeux.

5. Procédé selon la revendication 1, **caractérisé en ce que** de l'azote est pour l'essentiel utilisé en tant que milieu gazeux.

6. Procédé selon l'une quelconque des revendications précédentes, **caractérisé en ce que** le milieu gazeux circule à contre-courant d'une voie de chute du produit préliminaire transformé en gouttes.

7. Procédé selon la revendication 6, **caractérisé en ce que** le milieu gazeux est introduit à l'état tempéré dans la voie de chute du produit préliminaire transformé en gouttes, et ce au niveau le plus bas de la voie de chute.

8. Procédé selon la revendication 7, **caractérisé en ce que** l'équilibre en température du milieu gazeux est effectué au moyen d'un échangeur de chaleur, et **en ce que** le milieu gazeux circule en boucle.

9. Procédé selon l'une quelconque des revendications précédentes, **caractérisé en ce que** le produit préliminaire est transformé en gouttes à l'état fondu liquide au moyen d'une excitation par vibrations.

10. Procédé selon l'une quelconque des revendications précédentes, **caractérisé en ce que** le produit préliminaire est transformé en gouttes à une viscosité intrinsèque dans la plage comprise entre 0,05 et 0,3 dl/g

11. Procédé selon l'une quelconque des revendications précédentes, **caractérisé en ce que** le produit préliminaire est transformé en gouttes dont le diamètre se situe à plus de 80 % en poids dans la plage du double diamètre de l'injecteur, **en ce qu'**un diamètre inférieur au diamètre de l'injecteur intervient à moins de 3 % en poids, et **en ce qu'**un diamètre supérieur au triple du diamètre de l'injecteur intervient à moins de 10 % en poids du produit préliminaire transformé en gouttes.

12. Procédé selon l'une quelconque des revendications précédentes, **caractérisé en ce que**, lors de la transformation en gouttes, il est engendré une proportion en particules de poussière inférieure à 1 % en poids du produit préliminaire transformé en gouttes.

13. Procédé selon l'une quelconque des revendications précédentes, **caractérisé en ce qu'**un produit préliminaire de faible viscosité, d'une viscosité intrinsèque inférieure à 0,15, est transformé en gouttes dans une atmosphère avec de fines particules de polyester, de sorte que la surface des gouttes soit revêtue de particules de polyester qui favorisent la cristallisation, et qu'un collage des gouttes solidifiées soit évité.

14. Dispositif destiné à la mise en oeuvre du procédé selon l'une quelconque des revendications 1 à 14, le dispositif comportant :
une tête d'injection (1), qui engendre à partir du produit préliminaire des pellets en forme de gouttes (3) d'un diamètre de 0,3 à 3 mm par une excitation par vibrations de la masse fondue (2),
une tour de chute (4), dans laquelle le produit préliminaire transformé en gouttes peut être tempéré à contre-courant d'un milieu gazeux,
un échangeur de chaleur (5), qui est disposé dans la zone de fond de la tour de chute (4), et qui chauffe ou refroidit le milieu gazeux afin de le régler à une température d'entrée élevée homogène,
un ventilateur (6), qui accélère le milieu gazeux dans la tour de chute (4) à une vitesse de circulation donnée, et
une conduite de retour (7), qui amène le milieu gazeux à l'échangeur de chaleur (5) après sa sortie de la tour de chute (4).

15. Dispositif selon la revendication 14, **caractérisé en ce que** la tête d'injection (1) comporte des orifices d'injection (8) qui sont orientés verticalement, et qui assurent une transformation en gouttes dans le sens vertical au moyen de l'excitation par vibrations de la masse fondue (2).

16. Dispositif selon la revendication 14 ou 15, **caractérisé en ce que** l'échangeur de chaleur (5) règle la température du milieu gazeux à une température d'entrée supérieure ou égale à 30 °C et inférieure ou égale à 120 °C, de préférence supérieure ou égale à 40 °C et inférieure ou égale à 100 °C.

17. Dispositif selon l'une quelconque des revendications 14 à 16, **caractérisé en ce que** le ventilateur (6) peut être réglé à une vitesse de circulation du milieu gazeux dans la tour de chute (4) de 0,3 à 1 m/s.

18. Dispositif selon l'une quelconque des revendications 14 à 17, **caractérisé en ce que** la tour de chute (4) comporte une voie de chute (9) de 10 à 20 m, de préférence de 12 à 15 m, pour le produit préliminaire transformé en gouttes.
